# EUROPEAN PATENT SPECIFICATION

(11) **EP 2 271 803 B1**
(45) Date of publication and mention of the grant of the patent: **17.05.2017**
(21) Application number: 09720265.9
(22) Date of filing: 13.03.2009
(51) Int. Cl.: D21H 21/30, D21H 23/24, D21H 23/08, D21H 23/78, G01N 21/84, G01N 21/86, G01N 21/64

(54) **FLUOROMETRIC METHOD FOR MONITORING SURFACE ADDITIVES IN A PAPERMAKING PROCESS**
FLUOROMETRISCHES VERFAHREN ZUR ÜBERWACHUNG VON OBERFLÄCHENAKTIVEN ZUSATZMITTELN IN EINEM PAPIERHERSTELLUNGSPROZESS
PROCÉDÉ FLUOROMÉTRIQUE POUR LA SURVEILLANCE D ADDITIFS DE SURFACE DANS UN PROCÉDÉ DE FABRICATION DE PAPIER

(30) Priority: 13.03.2008 US 47736
(43) Date of publication of application: 12.01.2011
(73) Proprietor: Nalco Company, Naperville, IL 60563-1198 (US)
(72) Inventor: BANKS, Rodney, H., Aurora IL 60502 (US); ZHANG, Zhiyi, Naperville IL 60565 (US)
(74) Representative: HGF Limited
(86) International application number: PCT/US2009/037048
(87) International publication number: WO 2009/114750

(56) References cited:
- WO-A-01/86064
- WO-A-99/51817
- WO-A-03/002973
- WO-A-2008/054297
- GB-A- 1 348 638
- US-A- 3 956 630
- US-A- 5 087 670
- US-A- 5 162 131

## Description

### CROSS REFERENCE TO RELATED APPLICATION

This application is a continuation-in-part of U.S. Patent Application Serial No. 11/942,065, which is herein incorporated by reference.

### FIELD OF THE INVENTION

This invention pertains to monitoring and optionally controlling the addition of one or more surface additives to a papermaking process.

### BACKGROUND OF THE INVENTION

Current practice for measuring the amount of surface additive(s) usually consists of a manual technique of sheet disintegration and/or mass balance calculations that are relative in nature.

In the case of starch pickup at the size press, a papermaker (e.g. a boardmaker) will in many cases grossly over apply the amount of starch added to a papermaking process, in order to ensure enough starch is held on the surface of the sheet for the functional intent. Past trials included metering size press applications, which allowed the reduction of starch via a blade application technique. While this allowed a significant reduction of starch in the range of 50-70%, the risk associated with failures due to unpredicted and uncontrolled variations of starch pickup was too great to overcome. As a result, many papermakers reverted to puddle style size presses in order to ensure enough starch was added to the sheet.

WO-A-2008/054297 discloses a method for determination of the brightness of paper pulp by measuring fluorescence from UV, wherein the measurement is carried out directly in the pipe in which the paper pulp is fed forward by an in-line brightness meter, which also is capable of measuring fluorescent substances in the paper pulp. The method is used to control those partial stages in the process where fluorescent substances are present, or for brightness determination at the end of the process.

US-A-5087670 teaches a method for monitoring the coating weight, uniformity, defects or markings present in a coating of a composition applied to a substrate, the method comprising: (a) providing a substrate with a functional coating of a composition comprising an effective amount of a uvescer that absorbs radiant energy, i.e. has an excitation energy, of wavelength λ₁ and emits radiant energy of wavelength λ₂; b) scanning the coating with radiant energy having a wavelength within wavelength λ₁; c) detecting the radiant energy of wavelength λ₂ emitted by the coating; and d) optionally, correlating the emitted radiant energy to independently measured standard coating weights or thicknesses of the coating to measure coating weight, thickness, uniformity, defects or markings.

US-A-3956630 is concerned with a method and apparatus for the on-machine measurement of coat weights of coatings applied to paper webs or the like. The method facilitates separate coat weight measurements of a web coated on both sides and is carried out by including a small amount of a fluorescing optical brightener in the coating. The level of fluorescence of the optical brightener is continuously measured under a UV light source and the readings obtained are utilised to determine the coat weight applied.

GB-A-13956630 describes a process for the manufacture of paper, textiles or plastic sheets wherein the whiteness of the substrate whitened with a brightener and a tinting dye is controlled by measuring the fluorescence and reflectance values thereof using colorimeters and adjusting the amounts of brightener and tinting dye in response to such measurements. The adjustment is calculated from measurements of such values for standard concentrations of dye and brightener.

WO-A-01/86064 relates to a method and apparatus for controlling a colouring process wherein at least one fluorescent or non-fluorescent ingredient is added and the colour of the substrate is determined by using a colouring model which describes the effect of the ingredient on the radiance transfer factor for the substrate to be coloured. The colour is controlled by the amount of the ingredient that is added in the colouring process.

WO-A-99/51817 discloses a method for controlling the amount of polyelectrolyte present in a pulp or papermaking process stream by adding a fluorescent material having an opposite charge as compared to that of the polyelectrolyte and detecting the amount of fluorescence present at a preselected excitation wavelength and a preselected emission wavelength. This value for fluorescence is then compared to the value of fluorescence detected in the process stream when the process is running optimally and the feedrate of the polyelectrolyte to the process stream is then adjusted so that the fluorescence detected is similar to that detected when the process is running optimally. The method can be run in a batch mode, a continuous on-line mode or a continuous sidestream mode.

US-A-5162131 teaches a method and apparatus for measuring and regulating the quantity of coating in surface sizing or pigmenting of paper or board, wherein the coating agent is spread by means of a coating device in the form of a film onto the face of a roll in a size press. The film is transferred from the roll face onto the paper or board in the size press nip. A fluorescent marker agent is mixed into the roll coating or into the coating agent and the measurement of the coating quantity is carried out by means of X-ray fluorescence from the face of the size press roll before the film of coating agent is transferred onto the web. The roll face or coating agent present in the roll face is irradiated with X-ray radiation to fluoresce the marker agent, and the fluoresced radiation emitted by the marker agent contained in the roll coating and attenuated by the coating agent, or the fluoresced radiation emitted by the marker contained in the coating agent, is measured and converted to a value of coating thickness.

A more accurate and timely measurement of the amount of surface additives on a sheet is therefore desired. This potentially will allow the papermaker to drive addition rates to very low levels, while being able to quickly predict and control statistically out of specification addition rates.

### SUMMARY OF THE INVENTION

According to an aspect of the invention, there is provided a method according to claim 1. Certain preferred and optional features of the invention are recited in the dependent claims.

The method of monitoring and optionally controlling the addition of one or more surface additives to a papermaking process comprising the following steps: a) adding a known amount of a composition containing one or more surface additives to a papermaking process either alone or in known proportion with a known amount of one or more inert fluorescent tracers, wherein the composition containing the surface additives can only be added alone when the surface additives are capable of fluorescing; b) measuring the fluorescence of the surface additives and/or one or more inert fluorescent tracers in an apparatus that serves to hold or feed or apply an aqueous composition into said papermaking process; c) measuring the fluorescence of the composition containing the surface additives and/or one or more inert fluorescent tracers at a point subsequent to adding the surface additives and after a sheet has been formed, wherein the surface additives can only be measured when they are capable of fluorescing and wherein fluorescence is measured with a reflectance based fluorometer; d) correlating the amount of fluorescence of the surface additives when they are capable of fluorescing and/or inert fluorescent tracers with the concentration of the surface additives, and then correlating the amount of fluorescence of the surface additives when they are capable of fluorescing and/or inert fluorescent tracers on a sheet with the concentration of the surface additives in a coating on a sheet and/or thickness of a coating on a sheet; and e) optionally controlling the addition of a composition containing one or more surface additives to a papermaking process by adjusting the amount of the surface additives added to the papermaking process in response to the concentration of the surface additives; and if step c) occurs, then optionally controlling the addition of a composition containing one or more surface additives to a papermaking process by adjusting the concentration of the surface additives in the apparatus in response to coating thickness on a sheet and/or concentration of the surface additives in a coating on a sheet.

Also disclosed is a method of monitoring and optionally controlling the addition of one or more surface additives to a papermaking process comprising the following steps: (a) adding a known amount of one or more surface additives to a papermaking process either alone or in known proportion with a known amount of one or more inert fluorescent tracers, wherein the surface additives can only be added alone when the surface additives are capable of fluorescing; (b) measuring the fluorescence of the surface additives and/or one or more inert fluorescent tracers at a point subsequent to adding the surface additives and after a sheet has been formed, wherein the surface additives can only be measured when they are capable of fluorescing and wherein fluorescence is measured with a reflectance based fluorometer; (c) correlating the amount of fluorescence of the surface additives when they are capable of fluorescing and/or inert fluorescent tracers on a sheet with the concentration of the surface additives in a coating on a sheet and/or thickness of a coating on a sheet; and (d) optionally controlling the addition of one or more surface additives to a papermaking process by adjusting the amount of the surface additives added to the papermaking process in response to the coating thickness on a sheet and/or concentration of the surface additives in a coating on a sheet

Also disclosed is a method of monitoring and optionally controlling the addition of one or more surface additives to a papermaking process comprising the following steps: a) adding a known amount of a composition containing one or more surface additives to a papermaking process either alone or in known proportion with a known amount of one or more inert fluorescent tracers, wherein the composition containing the surface additives can only be added alone when the surface additives are capable of fluorescing; b) measuring the fluorescence of the surface additives and/or one or more inert fluorescent tracers at a point prior to sheet formation; c) optionally measuring the fluorescence of the composition containing the surface additives and/or one or more inert fluorescent tracers at a point subsequent to adding the surface additives and after a sheet has been formed, wherein the surface additives can only be measured when they are capable of fluorescing and wherein fluorescence is measured with a reflectance based fluorometer; d) correlating the amount of fluorescence of the surface additives when they are capable of fluorescing and/or inert fluorescent tracers with the concentration of the surface additives, and if step c) occurs, then correlating the amount of fluorescence of the surface additives when they are capable of fluorescing and/or inert fluorescent tracers on a sheet with the concentration of the surface additives in a coating on a sheet and/or thickness of a coating on a sheet; and e) optionally controlling the addition of the composition containing one or more surface additives to a papermaking process by adjusting the amount of the surface additives added to the papermaking process in response to the concentration of the surface additives, and if step c) occurs, then optionally controlling the addition of the composition containing one or more surface additives to a papermaking process by adjusting the amount of the surface additives added to the papermaking process in response to the coating thickness on a sheet and/or concentration of the surface additives in a coating on a sheet.

### DETAILED DESCRIPTION OF THE INVENTION

### Definitions:

"Papermaking process"/"papermaking processes" refer to a method(s) of making any kind of paper products (e.g. paper, tissue, board, etc.) from pulp comprising forming an aqueous cellulosic papermaking furnish, draining the furnish to form a sheet and drying the sheet. The steps of forming the papermaking furnish, draining and drying may be carried out in any conventional manner generally known to those skilled in the art. The papermaking process/processes may also include a pulping stage, i.e. making pulp from woody raw material and bleaching stage, i.e. chemical treatment of the pulp for brightness improvement. Moreover, the papermaking process includes all processing steps applied to a paper sheet up till the end-user receives and optionally analyzes the paper sheet prior to use of the paper product.

"Sheet"/"sheets" refer to sheet(s) formed as a result of or during a papermaking process/papermaking processes.

"Surface additive"/"surface additives" refer to papermaking additive(s) that impart one or more chemical and/or physical (e.g. mechanical) properties on a sheet surface. For example, the sheet can be a paper sheet, tissue sheet, board sheet, or any other type of sheet produced by a papermaking process. For example, an imparted chemical property may allow "ink" to bind to the paper in a more efficacious manner.

"NADH" refers to Nicotinamide Adenine Dinucleotide, reduced, and/or derivatives thereof.

"ATP" means Adenosine Tri-Phosphate.

### Preferred Embodiments:

As described above, one or more surface additives added to a papermaking process are tracked by a fluorometric-based protocol. This requires that the medium exposed to fluorescence is suitable for fluorometric measurement, e.g. the entire film depth of a coating is excited and its emission collected. One of ordinary skill in the art could determine this without undue experimentation.

The fluorometric protocol includes the following approaches: (1) the one or more surface additives are capable of fluorescing, inherent and/or modified to fluoresce, e.g. with a fluorescent moiety or by reacting with an in-system molecule or by other means aside from inherent characteristics, (2) one or more inert fluorescent tracers are added in known proportion with the surface additives, or (3) a combination thereof.

When a surface additive is capable of fluorescing, the fluorescence can be directly correlated to the concentration of the surface additive in a coating/thickness of a coating containing the surface additive, e.g. by calibrating fluorescence intensity with the concentration of the surface additive and/or thickness of a coating containing the surface additive. One of ordinary skill in the art could carry out this procedure without undue experimentation. In one embodiment, the surface additives are inherently fluorescent. In another embodiment, a fluorescent moiety can be covalently attached to the non- fluorescent surface additives. Therefore, the functionalized surface additives have fluorescent properties.

When an inert fluorescent tracer is involved, the inert fluorescent tracer is added in known proportion with the surface additive. The amount of surface additive or thickness of a coating containing a surface additive can be inferred from the fluorescence of the inert fluorescent tracer, e.g. by calibrating fluorescence intensity with concentration of the additive in a coating on a sheet and/or thickness of a coating containing the additive on a sheet. One of ordinary skill in the art could carry out this procedure without undue experimentation. In one embodiment, the inert fluorescent tracers can be added to a coating formulation at a specific known concentration such that by measuring the concentration of inert fluorescent tracers, the amount of the coating on a sheet or surface additives in a coating on a sheet can be inferred.

It may also be possible to monitor both a surface additive that is fluorescent and an inert fluorescent tracer. The amount of the coating on a sheet or surface additives in a coating on a sheet can be inferred from the fluorescence of the inert fluorescent tracer and fluorescence of the surface additive, by calibrating fluorescence intensity with concentration of the additive in a coaling on a sheet and/or thickness of a coating containing the additive on a sheet. One of ordinary skill in the art could carry out this procedure without undue experimentation. Various types of one or more inert fluorescent tracers may be utilized for this invention.

One of ordinary skill in the art would know what an inert fluorescent tracer is. In one embodiment, an inert fluorescent tracer is a substance, which is chemically non- reactive with any components in the papermaking process and does not itself degrade with time. It is completely soluble in the system at all relevant levels of concentration. Its fluorescence intensity is always/substantially proportional to its concentration and is not quenched or otherwise diminished by the system.

In another embodiment, an inert fluorescent tracer is an inert fluorescent tracer that is not appreciably or significantly affected by any other chemistry in a papermaking process. To quantify what is meant by "not appreciably or significantly affected", this statement means that an inert fluorescent compound has no more than a 10% change in its fluorescent signal, under conditions normally encountered in papermaking process. Conditions normally encountered in a papermaking process are known to people of ordinary skill in the art of a papermaking process.

In another embodiment, the desired characteristics for an inert fluorescent tracer, preferably include: high water solubility, excellent chemical stability, good fluorescence properties at manageable wavelengths (e.g. not be quenched by other additives in the sheet/paper sheet/board components), and can be monitored in the presence of common optical brightening agents, e.g. outside the wavelength of optical brighteners to prevent interference between optical brighteners and inert fluorescent tracers. In another embodiment, the inert fluorescent tracer is a FDA-approved tracer, which is required, for example, in food packaging.

In one embodiment, one or more inert fluorescent tracers are selected from the group consisting of at least one of the following: fluorescein or fluorescein derivatives, rhodamine or rhodamine derivatives, a sulfonate salt of naphthalene, a sulfonate salt of pyrene, a sulfonate salt of stilbene, a sulfonate salt of biphenyl, phenylalanine, tryptophan, tyrosine, vitamin A (retinol), vitamin B2 (riboflavin), vitamin B6 (pyridoxin), vitamin E (α-tocopherols), NADH, ATP, ethoxyquin, caffeine, vanillin, naphthalene sulfonate formaldehyde condensate, a phenyl sulfonate formaldehyde condensate, sulfonated lignin, a polymer containing at least one of the following moieties naphthalene sulfonates, pyrene sulfonates, biphenyl sulfonates, or stilbene sulfonates.

Depending on the papermaking process, the optimum concentration of inert fluorescent tracers will vary. One of ordinary skill in the art can determine the amount of inert fluorescent tracers without undue experimentation. Preferably, e.g., in the case of starch, higher concentrations of inert fluorescent tracers work better than lower concentrations of inert fluorescent tracers.

When measuring a paper sheet or solid surface, the fluorometer utilized should be a reflectance-based fluorometer since it is desired to determine the thickness of an applied thin coating onto the surface of an opaque sheet. One or more may be utilized.

A reflectance-based fluorometer is available from Nalco Company or Ocean Optics, Dunedin, FL.

An embodiment of a reflectance-based fluorometer uses an optical fiber to excite the tracer on a sheet and monitor its reflected fluorescence. A suitable light source, such as an LED, xenon flash lamp or discharge lamp provides the excitation light. The raw source light is filtered by a suitable excitation filter (available from Semrock, Inc./Andover, Inc.) to remove unwanted wavelengths in the fluorescence emission region. The light is reflected at 90 degrees and additionally filtered by a dichroic filter to give a new beam along a different direction. The beam is focused onto the core of a fiber optic cable by an appropriate lens. The other end of the fiber optic is positioned close to or touching the surface of the paper sheet in order to illuminate a region of its surface causing fluorescence emission. The emission is captured by the same fiber which carries the reflected light back to the lens where it is collimated and directed back onto the dichroic filter. Reflected excitation light is reflected back to the source while the fluorescence passes straight through to an emission filter. A suitable optical detector, such as a photodiode or photomultiplier tube, detects the filtered light. An optional reference detector can be used to correct for varying light source intensity.

Other designs for reflectance-based fluorometers would be apparent to one of ordinary skill in the art.

Other types of fluorometers may be utilized, especially in cases where fluorescence of a non-solid surface is measured.

In one embodiment, a handheld or benchtop fluorometer can be used when measuring the wet-end of a papermaking process prior to sheet formation or when one is measuring fluorescence of an aqueous composition of surface additives in an apparatus wherein the sample is collected and put into a cuvette that is inserted into the fluorometer. Alternatively, a fiber optic based handheld or benchtop fluorometer can be used wherein the probe is immersed in the collected sample for a fluorescence reading.

In another embodiment, an in-line fluorometer can be used when measuring the wet-end of a papermaking process prior to sheet formation or when one is measuring fluorescence of an aqueous composition of surface additives in an apparatus wherein the sample flows through a suitable flow cell in which sample fluorescence can be continuously measured. Alternatively, a fiber optic based, in-line fluorometer can be used wherein the probe is mounted such that it is immersed in the sample or mounted in a flow cell for a fluorescence measurement.

Various types of surface additives may be utilized in the present invention.

In one embodiment, the surface additives are selected from the group consisting of at least one of the following: starch, pigments, binders, plasticizers, and other additives to improve the physical properties of a paper/board sheet, including surface strength, brightness, printability, water resistance, or adhesion of subsequent coatings.

In another embodiment, the surface additives contain a covalently bonded fluorescent moiety. In another embodiment, the starch contains a covalently bonded fluorescent moiety.

The surface additives may be added at various stages in the papermaking process.

In one embodiment, the surface additives are added between a forming section of a papermaking process and a press section of a papermaking process. In another embodiment, the surface additives are added at the wet-end of a papermaking process.

In another embodiment, the surface additives are added to a papermaking process between or at a water box and a sheet. The fluorescence of the sheet may be measured at various points in the papermaking process.

In one embodiment, the fluorescence is measured at some point after the press section.

In another embodiment, the fluorescence is measured after the dryer section of a papermaking process. In another embodiment, the fluorescence is measured after a dry line in a forming section.

In another embodiment, the fluorescence is measured proximate to the press section.

In another embodiment, the fluorescence is measured in a papermaking process after a paper is converted to a narrow web or a sheet before end use.

In another embodiment, the fluorescence of starch containing a covalently bonded fluorescent moiety and/or fluorescence of inert fluorescent tracers added in known proportion with the starch is measured after a dryer section and before a coating section of a papermaking process.

In another embodiment, the fluorescence of the surface additives and/or fluorescence of inert fluorescent tracers added in known proportion with said surface additives, excluding starch, are measured after the coating section of a papermaking process.

Fluorescence may be measured at a fixed point (one point), e.g. a measurement in the machine-direction, or at plurality of points, e.g. scanning a plurality of points across the sheet in a cross-directional manner relative to the direction of travel of the paper sheet. A reflectance fluorometer may be utilized in various ways to carry out this task. One of ordinary skill in the art would appreciate various ways of carrying out this task.

In one embodiment, the fluorescence is measured at one point or a plurality of points.

In another embodiment, the fluorometer may be configured to measure in the machine direction, e.g. positioned at a fixed point.

In another embodiment, the measurement of a plurality of points occurs by scanning a fluorometer in a cross-directional manner relative to the direction of said sheet in said papermaking process, similar to the way other sheet monitoring instruments such as brightness or basis weight probes do.

In another embodiment, the fluorometer is configured so that on-line measurements can be taken. A controller may be utilized to implement the above-referenced protocol.

One or more controllers are in communication with the fluorometer and are programmed with an algorithm to collect said fluorescence measurements, correlate the amount of fluorescence of the surface additives when they are capable of fluorescing and/or inert fluorescent tracers on a sheet with the concentration of the surface additives in a coating on a sheet and/or thickness of a coating on a sheet; and optionally adjust the amount of the surface additives added to the papermaking process in response to the coating thickness on a sheet and/or concentration of the surface additives in a coating on a sheet in accord with a pre-determined protocol. Adjusting the amount of the surface additives added to the papermaking process in response to the coating thickness on a sheet and/or concentration of the surface additives in a coating on a sheet can be done in various ways.

As stated above, a controller can implement this response or it can be done manually through a papermaking process operator. The adjustment can be done by various means.

In one embodiment, adjustment can be done through the use of a spray boom in which the feed rate of the surface additives to the paper sheet can be adjusted.

In another embodiment, one could adjust additive feed rates independently in a plurality of zones across the sheet based on fluorescence readings by scanning a fluorometer in a cross- directional manner relative to the direction of said sheet in said papermaking process.

In another embodiment, one could adjust papermaking process parameters such as sheet speed through the paper machine, and/or sheet moisture.

In another embodiment, the settings of a metering size press can be adjusted in response to the coating thickness on a sheet and/or concentration of the surface additives in a coating on a sheet to maintain a desired thickness or to maximize production tonnage rate or minimize over usage of additives or energy.

In another embodiment, the surface additives are added onto the sheet by one or more mechanisms: spray system, roller coater, blade coater, cast coater, rod coater, air knife coater, curtain coater, flexo coater, gravure coater, and screen coater. In another embodiment, the apparatus may also include one or more parts of a paper machine in a papermaking process where the surface additives come in contact with a sheet in the papermaking process. In another embodiment, one can adjust the concentration of surface additives in the apparatus in response to the fluorescence measurements made of one or more samples from the apparatus by a handheld, benchtop, in-line fluorometer, or a combination thereof.

With respect to measuring an apparatus that serves to hold or feed an aqueous composition into the papermaking process, the apparatuses may be of various varieties kαown to those of ordinary skill in the art. In particular, the apparatus may also include parts of the paper machine where the surface additives come in contact with the sheet.

In one embodiment, the apparatus is a chemical feeder or receptacle that holds one or more chemicals. In a further embodiment, the chemicals are surface additives. With respect to the types of chemicals being feed into the process, they can of various types including, but not limited to the ones discussed above.

The following example is not limiting.

### EXAMPLES

### Protocol

Coat weight or coat thickness testing was performed following a standard testing protocol. Several coating solutions containing various amounts of coating solids were applied to the surface of test sample sheets. Preferably, the solid content and inert fluorescent tracer ratio was kept constant for all solutions. The coat weight on each sample sheet can be varied at the coating application time using various coating techniques. After drying, the dry coat weight, or pick-up, was measured by weight difference. Every individual sample sheet was weighed before and after coating application and the dry coat weight calculated by weight difference. The fluorescence intensity of the dry starch film was measured at several locations for a given sample sheet. The series of fluorescence intensities were then averaged to yield a single fluorescence intensity value for each sample sheet. Two different fluorometers were used to measure the fluorescence intensity of each sample sheet.

### Example 1

A test was run following the above-described protocol with three starch solutions containing increasing starch solids while maintaining the starch and inert fluorescent tracer ratio constant. The substrate for each test was an uncoated 21 -point paperboard sheet. Each solution was applied on separate sample sheets at four different thicknesses via a manual application method. A fourth starch solution containing no inert fluorescent tracer was also applied to a series of sample sheets for comparison with the traced solutions. The blank used in this trial was an uncoated sample sheet.

The starch dry coat weight (pick-up, in g/m²) was plotted against the fluorescence intensity (in arbitrary units - relative fluorescence units ("RFU"))- Each point corresponding to an individual sample sheet. This shows that the measured fluorescence intensities of the entire series of sample sheets measured fall on a line along the plot area diagonal. The linear regression on all points shows very clearly the direct and reliable correlation between the starch dry pick-up and the amount of inert fluorescent tracer present in the layer as measured by fluorescence intensity. The trend line has a y-intercept very close to zero and an R²- factor greater than 0.96. In a few cases, one point is significantly removed from the line. The same stray points were observed with two separate fluorometers, indicating that it is a property of the sample sheet, not an instrument related error. Such points are likely due to defects in the starch layer on the paper web. This data demonstrates that coating defects can be detected with the methods of the claimed invention.

## Claims

1. A method of monitoring and optionally controlling the addition of one or more surface additives to a papermaking process comprising the following steps:
(a) adding a known amount of a composition containing one or more surface additives to a papermaking process either alone or in known proportion with a known amount of one or more inert fluorescent tracers, wherein the composition containing the surface additives can only be added alone when the surface additives are capable of fluorescing;
(b) measuring the fluorescence of the surface additives and/or one or more inert fluorescent tracers in an apparatus that serves to hold or feed or apply an aqueous composition into said papermaking process;
(c) measuring the fluorescence of the composition containing the surface additives and/or one or more inert fluorescent tracers at a point subsequent to adding the surface additives and after a sheet has been formed, wherein the surface additives can only be measured when they are capable of fluorescing and wherein fluorescence is measured with a reflectance based fluorometer;
(d) correlating the amount of fluorescence of the surface additives when they are capable of fluorescing and/or inert fluorescent tracers with the concentration of the surface additives and then correlating the amount of fluorescence of the surface additives when they are capable of fluorescing and/or inert fluorescent tracers on a sheet with the concentration of the surface additives in a coating on a sheet and/or thickness of a coating on a sheet

2. The method of claim 1, comprising: (e) controlling the addition of the composition containing one or more surface additives to a papermaking process by adjusting the amount of the surface additives added to the papermaking process in response to the concentration of the surface additives.

3. The method of claim 1 or 2, comprising controlling the addition of the composition containing one or more surface additives to a papermaking process by adjusting the concentration of the surface additives in the apparatus in response to coating thickness on a sheet and/or concentration of the surface additives in a coating on a sheet.

4. The method of any preceding claim, wherein said apparatus is a chemical feeder or receptacle that holds one or more chemicals.

5. The method of claim 4 wherein said chemicals are surface additives.

6. The method of any one of claims 1 to 3, wherein the fluorescence is measured in a papermaking process after a paper is converted to a narrow web or a sheet before end use.

7. The method of any one of claims 1 to 3, wherein the surface additives are added onto the sheet by one or more mechanisms: spray system, roller coater, blade coater, cast coater, rod coater, air knife coater, curtain coater, flexo coater, gravure coater, and screen coater.

8. The method of any one of claims 1 to 3, wherein the apparatus may also include one or more parts of a paper machine in a papermaking process where the surface additives come in contact with a sheet in the papermaking process.

9. The method of any one of claims 1 to 3, further comprising adjusting the concentration of the surface additives in the apparatus in response to the fluorescence measurements made of one or more samples from the apparatus by a handheld fluorometer, benchtop fluorometer, in-line fluorometer, or a combination thereof.

## Patentansprüche

1. Verfahren zum Überwachen und optional Steuern der Hinzufügung von einem oder mehreren Oberflächenadditiven zu einem Papierherstellungsprozess, beinhaltend die folgenden Schritte:
(a) Hinzufügen einer bekannten Menge einer Zusammensetzung, die ein oder mehrere Oberflächenadditive enthält, zu einem Papierherstellungsprozess, entweder allein oder in bekannter Proportion zu einer bekannten Menge von einem oder mehreren inerten Fluoreszenztracern, wobei die Zusammensetzung, die die Oberflächenadditive enthält, nur alleine hinzugefügt werden kann, wenn die Oberflächenadditive fähig sind, zu fluoreszieren;
(b) Messen der Fluoreszenz der Oberflächenadditive und/oder des einen oder der mehreren inerten Fluoreszenztracer in einer Vorrichtung, die dazu dient, eine wässrige Zusammensetzung im Papierherstellungsprozess zu halten oder einzuspeisen oder anzuwenden;
(c) Messen der Fluoreszenz der Zusammensetzung, die ein oder mehrere Oberflächenadditive und/oder den einen oder die mehreren inerten Fluoreszenztracer enthält, an einem Punkt nach dem Hinzufügen der Oberflächenadditive und nachdem ein Bogen gebildet worden ist, wobei die Oberflächenadditive nur gemessen werden können, wenn sie fähig sind, zu fluoreszieren, und wobei die Fluoreszenz mit einem reflexionsbasierten Fluorometer gemessen wird;
(d) Korrelieren der Menge der Fluoreszenz der Oberflächenadditive, wenn sie fähig sind, zu fluoreszieren, und/oder der inerten Fluoreszenztracer mit der Konzentration der Oberflächenadditive und dann Korrelieren der Menge der Fluoreszenz der Oberflächenadditive, wenn sie fähig sind, zu fluoreszieren, und/oder der inerten Fluoreszenztracer auf einem Bogen mit der Konzentration der Oberflächenadditive in einer Beschichtung eines Bogens und/oder Dicke einer Beschichtung auf einem Bogen.

2. Verfahren gemäß Anspruch 1, umfassend: (e) Steuern der Hinzufügung der Zusammensetzung, die ein oder mehrere Oberflächenadditive enthält, zu einem Papierherstellungsprozess durch Anpassen der zum Papierherstellungsprozess hinzugefügten Menge der Oberflächenadditive als Reaktion auf die Konzentration der Oberflächenadditive.

3. Verfahren gemäß Anspruch 1 oder 2, umfassend Steuern der Hinzufügung der Zusammensetzung, die ein oder mehrere Oberflächenadditive enthält, zu einem Papierherstellungsprozess durch Anpassen der Konzentration der Oberflächenadditive in der Vorrichtung als Reaktion auf die Beschichtungsdicke auf einem Bogen und/oder Konzentration der Oberflächenadditive in einer Beschichtung auf einem Bogen.

4. Verfahren gemäß einem vorhergehenden Anspruch, wobei die Vorrichtung ein Chemikalieneinspeiser oder -behälter ist, der eine oder mehrere Chemikalien hält.

5. Verfahren gemäß Anspruch 4, wobei die Chemikalien Oberflächenadditive sind.

6. Verfahren gemäß einem der Ansprüche 1 bis 3, wobei die Fluoreszenz in einem Papierherstellungsprozess gemessen wird, nachdem ein Papier zu einer schmalen Bahn oder einen Bogen vor der Endverwendung konvertiert wird.

7. Verfahren gemäß einem der Ansprüche 1 bis 3, wobei die Oberflächenadditive dem Bogen durch einen oder mehrere Mechanismen hinzugefügt werden: Sprühsystem, Walzenbeschichter, Rakelbeschichter, Gießbeschichter, Stangenbeschichter, Luftmesserbeschichter, Vorhangbeschichter, Flexobeschichter, Gravurbeschichter und Siebbeschichter.

8. Verfahren gemäß einem der Ansprüche 1 bis 3, wobei die Vorrichtung auch einen oder mehrere Teile einer Papiermaschine in einem Papierherstellungsprozess umfassen kann, wobei die Oberflächenadditive mit einem Bogen im Papierherstellungsprozess in Kontakt kommen können.

9. Verfahren gemäß einem der Ansprüche 1 bis 3, ferner umfassend Anpassen der Konzentration der Oberflächenadditive in der Vorrichtung als Reaktion auf die Fluoreszenzmessungen, die an einer oder mehreren Proben aus der Vorrichtung durch ein handgehaltenes Fluorometer, ein Tischfluorometer, Inline-Fluorometer oder eine Kombination davon vorgenommen werden.

## Revendications

1. Procédé de surveillance et éventuellement de contrôle de l'ajout d'un ou plusieurs additifs de surface dans un procédé de fabrication de papier comprenant les étapes suivantes :
(a) ajout d'une quantité connue d'une composition contenant un ou plusieurs additifs de surface dans un procédé de fabrication de papier soit isolément soit en proportion connue avec une quantité connue d'un ou plusieurs marqueurs fluorescents inertes, ladite composition contenant les additifs de surface pouvant être ajoutée isolément uniquement lorsque les additifs de surface sont capables de fluorescence ;
(b) mesure de la fluorescence des additifs de surface et/ou d'un ou plusieurs marqueurs fluorescents inertes dans un appareil qui permet de maintenir ou d'alimenter ou d'appliquer une composition aqueuse dans ledit procédé de fabrication du papier ;
(c) mesure de la fluorescence de la composition contenant les additifs de surface et/ou un ou plusieurs marqueurs fluorescents inertes à la suite de l'ajout d'additifs de surface et après formation d'une feuille, lesdits additifs de surface pouvant être mesurés uniquement lorsqu'ils sont capables de fluorescence et ladite fluorescence étant mesurée à l'aide d'un réflectomètre-fluoromètre ;
(d) mise en corrélation de la quantité de fluorescence en provenance des additifs de surface lorsqu'ils sont capables de fluorescence et/ou des marqueurs fluorescents inertes avec la concentration en additifs de surface et ensuite mise en corrélation de la quantité de fluorescence des additifs de surface lorsqu'ils sont capables de fluorescence et/ou des marqueurs fluorescents inertes sur une feuille avec la concentration en additifs de surface dans le revêtement de la feuille et/ou l'épaisseur du revêtement de la feuille.

2. Procédé selon la revendication 1, comprenant : (e) le contrôle de l'ajout de la composition contenant un ou plusieurs additifs de surface dans un procédé de fabrication de papier par ajustement de la quantité d'additifs de surface ajoutée dans le procédé de fabrication de papier en fonction de la concentration en additifs de surface.

3. Procédé selon la revendication 1 ou 2, comprenant le contrôle de l'ajout de la composition contenant un ou plusieurs additifs de surface dans un procédé de fabrication de papier par ajustement de la concentration en additifs de surface dans ledit appareil en fonction de l'épaisseur de revêtement de la feuille et/ou de la concentration en additifs de surface dans le revêtement de la feuille.

4. Procédé selon l'une quelconque des revendications précédentes, ledit appareil étant un dispositif d'alimentation en produits chimiques ou un récipient contenant un ou plusieurs produits chimiques.

5. Procédé selon la revendication 4, lesdits produits chimiques étant des additifs de surface.

6. Procédé selon l'une quelconque des revendications 1 à 3, ladite fluorescence étant mesurée dans un procédé de fabrication de papier après transformation d'un papier en une bande étroite ou une feuille avant utilisation finale.

7. Procédé selon l'une quelconque des revendications 1 à 3, lesdits additifs de surface étant ajoutés sur la feuille par un ou plusieurs mécanismes : système d'aspersion, coucheuse à rouleau, coucheuse à lame, coucheuse au glacis, coucheuse à barre, coucheuse à lame d'air, coucheuse à rideau, coucheuse flexographique, coucheuse à rouleau gravé et coucheuse de sérigraphie.

8. Procédé selon l'une quelconque des revendications 1 à 3, ledit appareil pouvant aussi comprendre une ou plusieurs parties de la machine à papier dans le procédé de fabrication de papier, lesdits additifs de surface venant en contact avec la feuille dans le procédé de fabrication de papier.

9. Procédé selon l'une quelconque des revendications 1 à 3, comprenant en outre l'ajustement de la concentration en additifs de surfaces dans l'appareil en fonction des mesures de fluorescence effectuées à partir d'un ou plusieurs échantillons provenant de l'appareil par un fluoromètre portatif, un fluoromètre de table, un fluoromètre en ligne ou une combinaison de ceux-ci.
